# EUROPÄISCHE PATENTSCHRIFT

(11) **EP 0 377 861 B1**
(45) Veröffentlichungstag und Bekanntmachung des Hinweises auf die Patenterteilung: **09.02.1994**
(21) Anmeldenummer: 89123309.0
(22) Anmeldetag: 16.12.1989
(51) Int. Cl.: B60R 22/26, B60R 22/20, B60R 22/18

(54) **Klemmvorrichtung für einen Sicherheitsgurt eines Kraftfahrzeuges**
Seat belt clamping device for an automotive vehicle
Dispositif de blocage d'une ceinture de sécurité de véhicule automobile

(30) Priorität: 10.01.1989 DE 3900510
(43) Veröffentlichungstag der Anmeldung: 18.07.1990
(73) Patentinhaber: Bayerische Motoren Werke Aktiengesellschaft, 80788 München (DE)
(72) Erfinder: Hochmuth, Karl-Heinz, D-8057 Eching (DE)

(56) Entgegenhaltungen:
- WO-A-85/03676
- DE-A- 2 345 847
- DE-A- 3 629 091
- DE-U- 8 608 908
- FR-A- 2 123 701
- PATENT ABSTRACTS OF JAPAN vol. 11, no. 250 (M-616)(2697) 14 August 1987,& JP-A-62 59149 (FIJI KIKO CO LTD) 14 März 1987,

## Beschreibung

Die Erfindung bezieht sich auf eine Klemmvorrichtung für einen Sicherheitsgurt eines Kraftfahrzeuges, wie sie der Gattung nach in dem Anspruch 1 beschrieben ist.

Eine Klemmvorrichtung nach dem Oberbegriff des Anspruches 1 ist aus der DE-A-36 29 091 bekannt. Nach dieser Druckschrift befindet sich die Klemmvorrichtung im oberen Bereich der Rückenlehne eines Kraftfahrzeugsitzes und weist zwei Klemmbacken auf, zwischen denen sich ein Abschnitt des Sicherheitsgurtes befindet. Von den Klemmbacken führt der Sicherheitsgurt über eine Umlenkrolle, die gegen Federkraft verlagerbar ist, etwa in Höhe der Schulter eines Fahrzeuginsassen zur Vorderseite der Rückenlehne. Bei einer Blockierung des Sicherheitsgurtes in einem Aufrollautomat wird eine Gurtzuglast hervorgerufen, mit der gegen die Federkraft die Umlenkrolle beaufschlagt wird. Diese Bewegung dient der Verlagerung der beiden Klemmbacken zueinander, so daß ein Abschnitt des Sicherheitsgurtes dazwischen eingeklemmt wird. Die Klemmvorrichtung verhindert demnach den sogenannten Filmspuleneffekt der aufgewickelten Gurtbandlagen innerhalb des Aufrollautomaten. Weiterhin verringert sich die Dehnung des Sicherheitsgurtes an dem Abschnitt, der sich zwischen der Gurtaufwickelvorrichtung und der im oberen Bereich des Fahrzeugsitzes angeordneten Klemmvorrichtung befindet.

Eine derartige Klemmvorrichtung besitzt jedoch den Nachteil, daß sich bei unterschiedlich großen Fahrzeuginsassen der Austrittswinkel des Sicherheitsgurtes an der Umlenkrolle und damit das Ansprechverhalten der Klemmvorrichtung verändert.

Desweiteren besitzt die beschriebene Klemmvorrichtung der DE-A-36 29 091 eine vergrößert übersetzte Bewegung, die nach dieser Schrift von der Umlenkrolle auf einen Klemmbacken übertragen wird, der hierzu an einer geneigten Fläche eines sitzfesten Bauteiles verschiebbar geführt wird. Diese Anordnung ist gewählt, um einen geringen Bauraum für die Klemmvorrichtung zu beanspruchen.

Eine derartige Klemmvorrichtung mit schnellem Ansprechverhalten läßt sich in nachteiliger Weise nur über einen verschiebbaren Klemmbacken ausführen.

Aufgabe der Erfindung ist es, eine gattungsgemäße Klemmvorrichtung so weiterzuentwickeln, daß sie gegenüber dem Stand der Technik ein von der Fahrzeuginsassengröße unabhängiges Ansprechverhalten aufweist bei weitgehend freier Gestaltungsmöglichkeit einer gegenüber dem Stand der Technik verbesserten Klemmvorrichtung.

Die Aufgabe wird erfindungsgemäß mit den Merkmalen des Anspruchs 1 gelöst. Vorteilhafte Ausgestaltungen der Erfindung ergeben sich aus den Unteransprüchen.

Ein Vorteil der Erfindung nach Anspruch 1 besteht darin, daß die Klemmvorrichtung und damit das Umlenkelement für einen Sicherheitsgurt in seiner Höhe der Größe eines Fahrzeuginsassen angepaßt werden kann. Dadurch bleibt der Austrittswinkel des Sicherheitsgurtes am Umlenkelement und damit das Ansprechverhalten der Klemmvorrichtung in vorteilhafter Weise weitgehend konstant.

Bei einer bevorzugten Ausführungsform des Erfindungsgegenstandes erfolgt die Höhenverstellung der Klemmvorrichtung über eine verstellbare Nackenstütze. So lassen sich beispielsweise Bauteile und eine Steuereinrichtung zur Höhenverstellung der Nackenstütze mitverwenden für die Verstellung der Klemmvorrichtung.

Ein weiteres Ausgestaltungsbeispiel des Erfindungsgegenstandes besitzt ein Umlenkelement, das an seiner Auflagefläche für den Sicherheitsgurt eine Neigung aufweist. Sie entspricht in vorteilhafter Weise dem Verlauf des Abschnittes des angelegten Sicherheitsgurtes, der als Schrägschultergurt im wesentlichen diagonal über die Vorderseite der Rückenlehne führt. Damit legt sich der Sicherheitsgurt optimal an den Oberkörper eines angegurteten Fahrzeuginsassen an.

Eine Ausführungsform des Erfindungsgegenstandes ist dadurch gekennzeichnet, daß die Klemmvorrichtung platzsparend in einem der Nackenstütze zugeordneten Träger angeordnet ist.

In weiterer Ausgestaltung des Erfindungsgegenstandes ist eine Drehscheibe mit einem Schlitz zum Durchtritt des Schrägschultergurtes aus der Rückenlehne vorgesehen. Durch diese Abdeckung der Austrittsöffnung für den Oberkörpergurt aus der Rückenlehne bzw. der Nackenstütze wird in vorteilhafter Weise ein optisch ansprechender Eindruck vermittelt, und zwar sowohl in der Gebrauchslage, das heißt bei angelegtem Sicherheitsgurt, als auch in der Nichtgebrauchslage mit veränderter Austrittsrichtung des Schrägschultergurtes.

Der Erfindungsgegenstand ist nicht auf eine Anordnung der Klemmvorrichtung am Fahrzeugsitz beschränkt, geht jedoch von einem Stand der Technik nach der DE-A-36 29 091 aus. Demnach besitzt die Klemmvorrichtung zwei zueinander bewegliche Klemmbacken, die von einem Umlenkelement mit einer vergrößert übersetzten Bewegung beaufschlagt werden. In erfindungsgemäßer Weiterentwicklung dieses Standes der Technik ist ein zweiarmiger Hebel ortsfest drehgelagert, der mit einem kurzen Hebelarm mit dem Umlenkelement bewegungsübertragend verbunden ist und mit einem langen Hebelarm einen Klemmbacken aufnimmt. Dieser klemmt am Ende seiner Bewegung einen Sicherheitsgurt zusammen mit einem orstfesten Klemmbacken fest. Im Gegensatz zum Stand der Technik mit einem verschiebbaren Klemmbacken läßt sich die Klemmvorrichtung in vorteilhafter Weise mit einem drehbeweglichen Klemmbacken ausführen.

Eine Ausführungsform dieses Erfindungsgegenstandes besitzt als Umlenkelement einen Schwenkarm, der an einem Ende ortsfest und parallel zur Drehachse des Hebels sowie benachbart dem Ende des langen Hebelarmes drehgelagert ist. Das freie Ende des Schwenkarmes ist dem kurzen Hebelarm des Hebels benachbart angeordnet. Dies stellt eine vorteilhafte platzsparende Anordnung dar, bei der die Bewegung des Umlenkelementes und des Hebels mit gleichem Drehrichtungssinn erfolgt.

Eine vorteilhafte Ausgestaltung dieses Ausführungsbeispieles des Erfindungsgegenstandes ist dadurch gekennzeichnet, daß der Schwenkarm an einem ortsfesten Bauteil bei Überschreiten eines Grenzwertes der Gurtzuglast abstützbar ist. Hierzu befindet sich am Schwenkarm eine innere Fläche, die seiner Auflagefläche für den Sicherheitsgurt gegenüberliegt und die einer hierzu nachgeformten Lagerfläche des ortsfesten Bauteiles zugeordnet ist. Damit befindet sich das ortsfeste Bauteil zwischen dem Hebel und dem Schwenkarm, so daß in vorteilhafter Weise eine sehr kompakte Bauweise der Klemmvorrichtung erzielt wird.

Eine Ausführungsform des Erfindungsgegenstandes besitzt ein verformbares Bauteil, das den Hebel und das Umlenkelement verbindet. Das Bauteil hat die Aufgabe einer Kraftbegrenzung bei Betätigung der Klemmvorrichtung, so daß Lager und Bauteile der Klemmvorrichtung gering belastet werden. Damit ergibt sich eine Klemmvorrichtung mit dem Vorteil eines verringerten Bauaufwandes und eines geringeren Gewichtes.

In weiterer vorteilhafter Ausgestaltung dieses Ausführungsbeispieles weist das verformbare Bauteil zu seiner Wiederverwendung ein elastisches Formänderungsverhalten auf.

Zweckmäßigerweise läßt sich das elastische Bauteil bei einer Ausgestaltung des genannten Ausführungsbeispieles als Biegefeder ausführen. Sie führt bei einer Belastung eine Auslenkung senkrecht zur Betätigungsrichtung der Klemmvorrichtung aus. Dadurch kann beispielsweise der Bauraum, den die Klemmvorrichtung beansprucht, besser ausgenutzt werden.

Nach einer Ausführungsform des Erfindungsgegenstandes besteht der Schwenkarm aus Kunststoff, um in vorteilhafter Weise den Reibungskoeffizient an der Auflagefläche des Sicherheitsgurtes am Schwenkarm zu verringern.

Zur Schonung des Gurtbandes und um eine bessere Eingriffswirkung der Klemmvorrichtung zu erreichen, ist nach einem weiteren Ausführungsbeispiel des Erfindungsgegenstandes der verlagerbare Klemmbacken am Hebel schwenkbeweglich angeordnet.

Nach einer weiteren Ausführungsform des Erfindungsgegenstandes ist das Umlenkelement im wesentlichen in einer Ebene quer zur Fahrzeuglängsrichtung schwenkbar. Mit dieser Anordnung wird eine optimale Auflagefläche des Sicherheitsgurtes am Umlenkelement auch bei geändertem Verlauf des Schrägschultergurtes erreicht.

Ein bevorzugtes Ausführungsbeispiel der Erfindung ist in der nachfolgenden Beschreibung und der zugehörigen Zeichnung näher dargestellt. Es zeigen:
- Figur 1: eine Sicherheitsgurtanordnung an einem Fahrzeugsitz eines Kraftfahrzeuges,
- Figur 2: eine Klemmvorrichtung im oberen Bereich der Rückenlehne des Fahrzeugsitzes nach der Figur 1, hierzu vergrößert und aus einem anderen Blickwinkel,
- Figur 3: eine Klemmvorrichtung entsprechend Figur 2, zusätzlich mit einer schwenkbaren Anordnung für ein Umlenkelement des Sicherheitsgurtes.

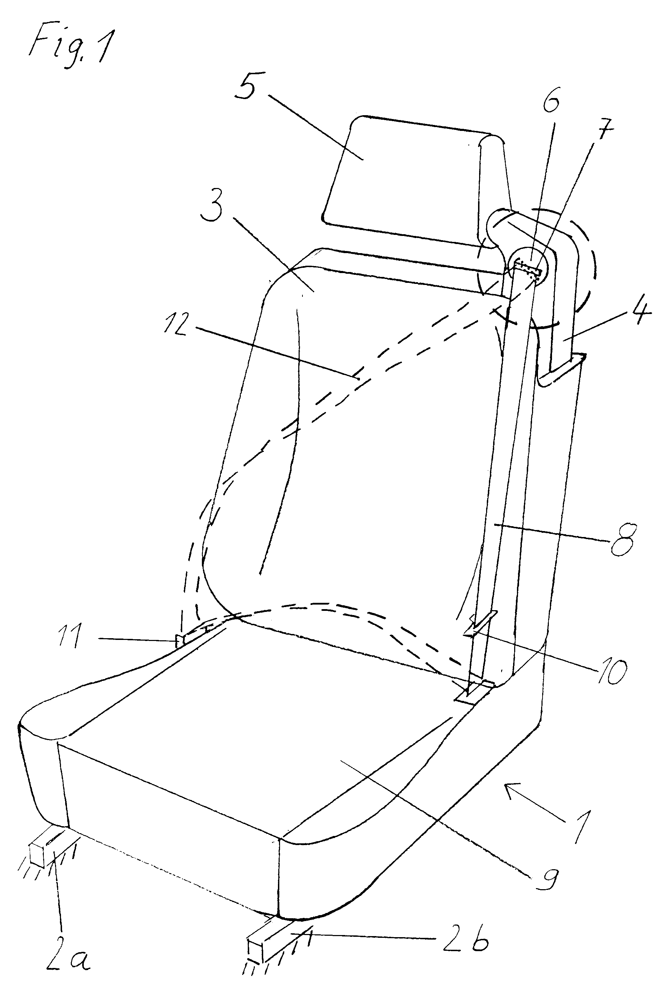

Die Figur 1 zeigt einen Fahrzeugsitz 1 in einem Kraftfahrzeug, der an zwei aufbaufesten Schienen 2a und 2b in nicht näher dargestellter Weise befestigt ist. An der Außenseite und im oberen Bereich einer Rückenlehne 3 befindet sich ein Träger 4, der in der Längserstreckung der Rückenlehne 3 verschiebbar und über nicht dargestellte Mittel arretierbar ist. Am oberen abgewinkelten Ende des Trägers 4 ist eine Nackenstütze 5 befestigt.

Desweiteren besitzt der Träger 4 in diesem Bereich eine Drehscheibe 6 mit einem Schlitz 7 zum Durchtritt eines Sicherheitsgurtes 8, von dem ein Ende geradlinig nach unten zu einer nicht bezeichneten Befestigung seitlich an einer Sitzfläche 9 des Fahrzeugsitzes 1 führt. Das zweite Ende des Sicherheitsgurtes 8 führt innerhalb der Rückenlehne 3 zu einer nicht dargestellten Gurtaufrollvorrichtung, die sich im unteren Bereich der Rückenlehne 3 befindet.

Zum Anlegen des Sicherheitsgurtes 8 läßt sich eine Zunge 10, die den Sicherheitsgurt 8 umschließt, in einem Gurtschloß 11 arretieren. Es befindet sich gegenüberliegend der vorgenannten Befestigung seitlich an der Sitzfläche 9. Dadurch wird der Gurtabschnitt außerhalb des Fahrzeugsitzes 1 in allgemein bekannter Weise in zwei Abschnitte aufgeteilt, von denen ein erster diagonal über die Rückenlehne 3 verlaufend einen strichliert wiedergegebenen Schrägschultergurt 12 darstellt. Der ebenfalls strichliert wiedergegebene zweite Abschnitt des Sicherheitsgurtes 8 ist als Beckengurt 13 bezeichnet. Er stellt die Verbindung dar zwischen dem Gurtschloß 11 und dem außerhalb des Fahrzeugsitzes 1 angeordneten Ende des Sicherheitsgurtes 8.

Entsprechend dem diagonalen Verlauf des Oberkörpergurtes 12 schwenkt die Drehscheibe 6 mit ihrem Schlitz 7, der in dieser Position andeutungsweise punktiert wiedergegeben ist.

Durch die Höhenverstellung der Nackenstütze 5 mit dem Träger 4 läßt sich beispielsweise der Schrägschultergurt 12 in seiner Länge und in seinem Verlauf der Schulterhöhe eines Fahrzeuginsassen anpassen.

In der Nichtgebrauchslage des Sicherheitsgurtes 8 stellt sich die Drehscheibe 6 infolge der Rückzugskraft der Gurtaufrollvorrichtung so ein, daß der Schlitz 7 waagrecht verläuft. Demzufolge weist der Sicherheitsgurt 8 im Eintrittsbereich in den Träger 4 bzw. der Rückenlehne 3 in seiner Nichtgebrauchslage in vorteilhafter Weise keine sichtbaren Falten auf.

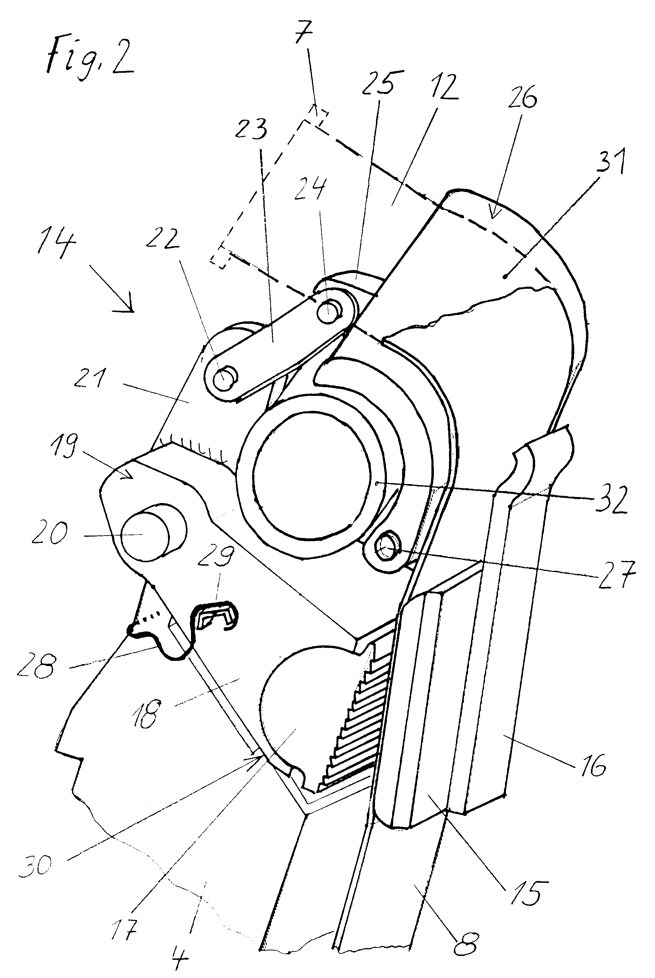

Der strichliert eingekreiste Bereich des Fahrzeugsitzes 1 nach der Figur 1 ist aus einer Blickrichtung von der Rückseite der Rückenlehne vergrößert und teilweise geschnitten in der Figur 2 dargestellt. Der Fahrzeugsitz 1 besitzt in diesem Bereich eine Klemmvorrichtung 14 mit einen Klemmbacken 15, der in nicht näher dargestellter Weise an einem sitzrahmenfesten Bauteil 16 befestigt ist. Gegenüberliegend dem Klemmbacken 15 befindet sich ein Klemmbacken 17, zwischen denen sich ein Abschnitt des Sicherheitsgurtes 8 befindet. Der Klemmbacken 17 weist eine im Profil halbkreisförmige Lagerfläche in einem Hebelarm 18 auf. Dadurch ist der Klemmbacken 17 begrenzt schwenkbeweglich am Hebelarm 18 geführt.

Dieser ist Teil eines Hebels 19, der über einen Lagerbolzen 20 an dem Träger 4 nach Figur 1 drehgelagert ist. Gegenüberliegend dem Klemmbacken 17 befindet sich am Hebel 19 ein Hebelarm 21, der an seinem freien Ende über einen Drehbolzen 22 das Ende einer Biegefeder 23 aufnimmt. Das andere Ende der Biegefeder 23 ist an einem Drehbolzen 24 schwenkbeweglich gelagert, der über einen Tragarm 25 an einem Schwenkarm 26 (Umlenkelement) fest verbunden ist.

Der Schwenkarm 26 weist einen Achskörper 27 auf, der aufgrund der Schnittdarstellung der Figur 2 in nicht wiedergegebener Weise in dem Träger 4 drehgelagert ist. Der Lagerbolzen 20, die Drehbolzen 22 und 24 sowie der Achskörper 27 besitzen zueinander parallele Drehachsen.

Eine Feder 28 stützt sich mit ihrem einen Ende am Träger 4 und mit ihrem anderen Ende an einer Nase 29 des Hebelarmes 18 ab, so daß der Hebel 19 mit seinem Hebelarm 18 an einem Anschlag 30 des Trägers 4 federvorgespannt anliegt. Über die vorbeschriebenen drehbeweglichen Verbindungsstellen ergibt sich damit für den Klemmbacken 17 und für den Schwenkarm 26 eine definierte Lage, bei welcher der Sicherheitsgurt 8 zwischen den Klemmbacken 17 und 15 freibeweglich durchgeführt ist. Von dort läßt sich der Sicherheitsgurt 8 mit einer Gleitbewegung am Schwenkarm 26 umlenken und zum Schlitz 7 der in der Figur 1 dargestellten Drehscheibe 6 führen. Zur besseren Übersicht ist der Abschnitt des umgelenkten Sicherheitsgurtes 8, ebenso wie der Schlitz 7, lediglich strichliert wiedergegeben.

Der Figur 2 ist zu entnehmen, daß eine Auflagefläche 31 des Sicherheitsgurtes 8 am Schwenkarm 26 in Blickrichtung einen von vorne nach hinten ansteigenden Verlauf aufweist. Der Anstieg entspricht dabei in vorteilhafer Weise dem Verlauf des Oberkörpergurtes 12 nach der Figur 1.

An der Innenseite des Schwenkarmes 26 befindet sich nachgebildet und in einem Abstand hierzu ein Ringkörper 32, der mit dem Träger 4 in nicht dargestellter Weise fest verbunden ist.

Bei einem Unfall wird, wie allgemein bekannt, die Wickelwelle einer Gurtaufrollvorrichtung, die sich nach den Ausführungen zu Figur 1 im unteren Bereich der Rückenlehne 3 befindet, gurtband- und/oder fahrzeugsensitiv festgehalten. Dadurch kann der Sicherheitsgurt 8 eine Kraft aufnehmen, die durch die Verlagerung des angegurteten Fahrzeuginsassen entsteht. Durch die Umlenkung des Sicherheitsgurtes 8 an seiner Auflagefläche 31 am Schwenkarm 26 schwenkt dieser gegen die Kraft der Feder 28 um den Achskörper 27 in umgekehrtem Uhrzeigersinn. Die vorbeschriebenen drehbeweglichen Verbindungsstellen übertragen diese Bewegung letztendlich auf den Hebelarm 18, der mit dem Klemmbacken 17 an den Klemmbacken 15 drückt und dabei den Sicherheitsgurt 8 einklemmt. Dabei verschwenkt der Klemmbacken 17 gegenüber dem Hebelarm 18, wodurch eine ganzflächige Anlage der in Zahnform ausgebildeten Oberfläche des Klemmbacken 17 an den Sicherheitsgurt 8 erreicht wird.

Durch eine große Übersetzung am Hebel 19 ergibt sich ein schnelles Ansprechverhalten der Klemmvorrichtung 14 auf eine Bewegung des Schwenkarmes 26.

Zur Kraftbegrenzung der Klemmvorrichtung 14, insbesondere der drehlagernden Bauteile, läßt sich die Biegefeder 23 senkrecht zur Betätigungsrichtung elastisch auslenken, so daß der Schwenkarm 26 mit seiner Innenfläche am Ringkörper 32 zur Anlage kommt. Bei größerer Kraftübertragung wird dabei im wesentlichen der Ringkörper 32 zusätzlich belastet. Nicht nur die in der Bewegungsübertragung dem Schwenkarm 26 nachgeschalteten beweglichen Teile, sondern auch der Achskörper 27 lassen sich in vorteilhafter Weise auf eine abhängig von der Auslegung der Biegefeder 23 begrenzte Maximalbeanspruchung auslegen. Dadurch läßt sich der Schwenkarm 26 in Kunststoff ausführen, so daß ein geringer Reibungskraftkoeffizient an der Auflagefläche 31 entsteht.

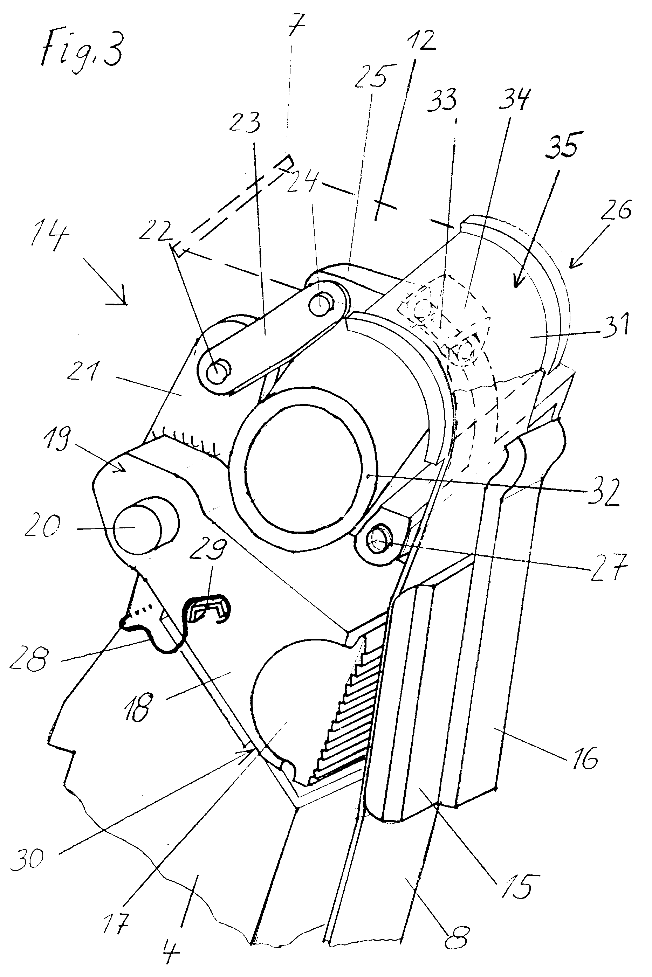

Das Ausführungsbeispiel nach Figur 3 unterscheidet sich von dem der Figur 2 dadurch, daß der Schwenkarm 26 über ein Drehgelenk geteilt ist. Als Drehgelenk dient ein Zapfen 33, der sich im wesentlichen in Fahrzeuglängsrichtung erstreckt. Er verbindet den Tragarm 25 mit dem Ende des Schwenkarmes 26, das den Achskörper 27 umschließt. Auf dem Zapfen 33 ist ein Fortsatz 34 gelagert, der an der Innenfläche einer Wippe 35 befestigt ist. Diese ist Teil des Schwenkarmes 26 und besitzt mit ihrer Auflagefläche 31 die Aufgabe der Gurtbandführung. Damit läßt sich die Wippe 35 mit einem geänderten Verlauf des Schrägschultergurtes 12 selbsttätig drehbeweglich einstellen.

## Patentansprüche

1. Klemmvorrichtung (14) für einen Sicherheitsgurt (8) eines Kraftfahrzeuges, die an einem Fahrzeugsitz (1) im oberen Bereich der Rückenlehne (3) angeordnet ist, wobei der Sicherheitsgurt (8) mit einem Ende in einem sperrbaren Aufrollautomat aufwickelbar ist und über ein im oberen Bereich der Rückenlehne (3) angeordnetes Umlenkelement (26) führt, das bei gesperrtem Aufrollautomat ab einer vorgegebenen Gurtzuglast verlagerbar die Klemmvorrichtung (14) auslöst, dadurch gekennzeichnet, daß die Klemmvorrichtung (14) gegenüber dem Fahrzeugsitz (1) höhenverstellbar ist.

2. Klemmvorrichtung nach Anspruch 1, dadurch gekennzeichnet, daß die Höhenverstellung über eine verstellbare Nackenstütze (5) des Fahrzeugsitzes (1) erfolgt.

3. Klemmvorrichtung nach Anspruch 1 oder 2, dadurch gekennzeichnet, daß das Umlenkelement (26) an seiner Auflagefläche (31) für den Sicherheitsgurt (8) eine Neigung aufweist entsprechend dem Verlauf des Abschnittes des Sicherheitsgurtes (8), der im angelegten Zustand als Schrägschultergurt (12) vorgesehen ist.

4. Klemmvorrichtung nach Anspruch 2 oder 3, dadurch gekennzeichnet, daß die Klemmvorrichtung (14) in einem der Nackenstütze (5) zugeordneten Träger (4) angeordnet ist.

5. Klemmvorrichtung nach einem der Ansprüche 1 bis 4, dadurch gekennzeichnet, daß eine Drehscheibe (6) mit einem Schlitz (7) zum Durchtritt des Sicherheitsgurtes (8) aus dem Fahrzeugsitz (1) vorgesehen ist.

6. Klemmvorrichtung nach einem der Ansprüche 1 bis 5, dadurch gekennzeichnet, daß ein gegen Federkraft verlagerbares Umlenkelement (26) für den Sicherheitsgurt (8), eine Gurtzuglast aufnimmt, die zur Verlagerung des Umlenkelementes (26) führt, das einen ersten, beweglichen Klemmbacken (17) mit einer vergrößert übersetzten Bewegung beaufschlagt, der dadurch zusammen mit einem zweiten, ortsfesten Klemmbacken (15) einen Abschnitt des Sicherheitsgurtes (8) einklemmt, wobei ein ortsfest drehgelagerter, zweiarmiger Hebel (19) einen kurzen Hebelarm (21), der mit dem Umlenkelement (26) bewegungsübertragend verbunden ist, und einen langen Hebelarm (18) aufweist, der an seinem Ende den auf diese Weise schwenkbeweglichen Klemmbacken (17) trägt.

7. Klemmvorrichtung nach Anspruch 6, dadurch gekennzeichnet, daß das Umlenkelement als Schwenkarm (26) ausgeführt, an einem Ende ortsfest und parallel zur Drehachse des Hebels (19) sowie benachbart dem Ende des langen Hebelarmes (18) drehgelagert und an seinem freien Ende dem kurzen Hebelarm (21) zugeordnet ist.

8. Klemmvorrichtung nach Anspruch 7, dadurch gekennzeichnet, daß der Schwenkarm (26) eine an seiner Auflagefläche (31) für den Sicherheitsgurt (8) gegenüberliegende, innere Fläche aufweist, an der an einer hierzu nachgeformten Lagerfläche eines ortsfesten Bauteiles (Ringkörper 32) der Schwenkarm (26) bei Überschreiten eines Grenzwertes der Gurtzuglast abstützbar ist.

9. Klemmvorrichtung nach einem der Ansprüche 6 bis 8, dadurch gekennzeichnet, daß der Hebel (19) und das Umlenkelement über ein verformbares Bauteil verbunden sind.

10. Klemmvorrichtung nach Anspruch 9, dadurch gekennzeichnet, daß das verformbare Bauteil ein elastisches Formänderungsverhalten aufweist.

11. Klemmvorrichtung nach Anspruch 10, dadurch gekennzeichnet, daß das verformbare Bauteil aus einer Biegefeder (23) besteht, die bei einem Grenzwert der Gurtzuglast senkrecht zur Betätigungsrichtung der Klemmvorrichtung (14) ausgelenkt wird.

12. Klemmvorrichtung nach einem der Ansprüche 8 bis 11, dadurch gekennzeichnet, daß der Schwenkarm (26) aus Kunststoff besteht.

13. Klemmvorrichtung nach einem der Ansprüche 6 bis 12, dadurch gekennzeichnet, daß der verlagerbare Klemmbacken (17) am Ende des langen Hebelarmes (18) schwenkbeweglich angeordnet ist.

14. Klemmvorrichtung nach einem der Ansprüche 1 bis 13, dadurch gekennzeichnet, daß das Umlenkelement im wesentlichen in einer Ebene quer zur Fahrzeuglängsrichtung schwenkbar angeordnet ist.

## Claims

1. A device (14) for clamping a seat belt (8) in a vehicle and disposed in the upper region of the back (3) of a seat (1), one end of the seat belt (8) being adapted to be wound up in a lockable automatic take-up device and being guided over an element (26) which is disposed in the upper region of the seat back (3) and, when the take-up device is locked, movably releasing the clamping device (14) after the tensile load on the belt exceeds a given value, characterised in that the clamping device (14) is vertically adjustable relatively to the car seat (1).

2. A clamping device according to claim 1, characterised in that the vertical adjustment is made via an adjustable neck rest (5) on the seat (1).

3. A clamping device according to claim 1 or 2, characterised in that the surface (31) of the guide element (26) bearing or supporting the seat belt (8) has a slope corresponding to the slope of that portion of the belt (8) which is provided for wearing as a diagonal shoulder belt (12).

4. A clamping device according to claim 1 or 2, characterised in that the clamping device (14) is disposed in a holder (4) associated with the neck rest (5).

5. A clamping device according to any of claims 1 to 4, characterised in that a rotary disc (6) with a slot (7) is provided for receiving the belt (8) extending from the seat (1).

6. A clamping device according to any of claims 1 to 5, characterised in that an element (26) movable against spring force for guiding the seat belt (8) receives a tensile load on the belt, thus moving the guide element (26) which transmits increased stepped-up motion to a first movable clamping jaw (17) which consequently, in co-operation with a second stationary clamping jaw (15), clamps a portion of the seat belt (8), and a stationary pivotable two-armed lever (19) has a short arm (21) connected so as to transmit motion to the guide element (26) and a long arm (18) which at its end bears or supports the clamping jaw (17), which is consequently pivotable.

7. A clamping device according to claim 6, characterised in that the guide element is a swivel arm (26) which is stationary at one arm and pivoted parallel to the axis of rotation of the lever (19) and near the end of the long lever arm (18), while its free end is associated with the short lever arm (21).

8. A clamping device according to claim 7, characterised in that the swivel arm (26) has an inner surface opposite the surface (31) which supports the seat belt (8), and when the tensile load on the belt exceeds a given value, the swivel arm (26) can rest against the inner surface on a correspondingly-shaped bearing surface of a stationary component (annular member 32).

9. A clamping device according to any of claims 6 to 8, characterised in that the lever (19) and the guide element are connected via a deformable component.

10. A clamping device according to claim 9, characterised in that the deformable component has elastic shape-changing properties.

11. A clamping device according to claim 10, characterised in that the deformable component is a spiral spring (23) which is swung out at right angles to the direction of actuation of the clamping device (14) when the tensile load on the belt exceeds a limiting value.

12. A clamping device according to any of claims 8 to 11, characterised in that the swivel arm (26) is made of plastics.

13. A clamping device according to any of claims 6 to 12, characterised in that the movable clamping jaw (17) is pivotably disposed on the end of the long lever arm (18).

14. A clamping device according to any of claims 1 to 13, characterised in that the swivel element is disposed so as to be pivotable substantially in a plane at an angle to the longitudinal direction of the vehicle.

## Revendications

1. Dispositif de blocage (14) pour une ceinture de sécurité (8) d'un véhicule automobile, qui est disposé dans la zone supérieure du dossier (3), dans un siège 1, dispositif dans lequel la ceinture de sécurité (8) s'enroule par une extrémité dans un enrouleur automatique pouvant être bloqué et passe sur un élément de renvoi (26) disposé dans la zone supérieure du dossier (3), lequel peut se déplacer quand l'enrouleur automatique est bloqué à partir d'une force de traction prédéfinie s'exercent sur la ceinture, dispositif de blocage caractérisé en ce qu'il est réglable en hauteur par rapport au siège du véhicule (1).

2. Dispositif de blocage selon la revendication 1, caractérisé en ce que le réglage en hauteur a lieu au moyen d'un appui-tête réglable (5) du siège du véhicule (1).

3. Dispositif de blocage selon la revendication 1 ou 2, caractérisé en ce que l'élément de renvoi (26) présente une inclinaison sur sa surface d'appui (31) pour la ceinture de sécurité (8) en fonction du parcours de la section de la ceinture de sécurité (8) qui est prévue comme ceinture oblique d'épaule (12) quand elle est mise.

4. Dispositif de blocage selon la revendication 2 ou 3, caractérisée ce que le dispositif de blocage (14) est disposé dans un support (4) associé à l'appuie-tête (5).

5. Dispositif de blocage selon l'une des revendications 1 à 4, caractérisé en ce qu'un disque tournant (6) pourvu d'une fente (7) est prévu pour le passage de la ceinture de sécurité (8) à partir du siège du véhicule (1).

6. Dispositif de blocage selon l'une des revendications 1 à 5, caractérisé en ce qu'il comprend un élément de renvoi (26) pour la ceinture de sécurité (8), cet élément pouvant se déplacer à l'encontre de la force d'un ressort recueille une force de traction s'exerçant sur la ceinture, et conduisant au déplacement de l'élément de renvoi (26), afin d'actionner une première mâchoire mobile de serrage (17) par un mouvement amplifié par démultiplication et afin de bloquer une section de la ceinture de sécurité (8) en coopération avec une deuxième mâchoire de serrage (15) fixe ; un levier à deux bras (19) monté de façon à pouvoir tourner sur un pivot fixe, présentant un bras de levier court (21), qui est relié à l'élément de renvoi (26) en leur transmettant le mouvement et un bras de levier long (18) qui porte à son extrémité la mâchoire de serrage (17) pivotant de cette manière.

7. Dispositif de blocage selon la revendication 6, caractérisé en ce que l'élément de renvoi réalisé sous la forme du bras pivotant (26) est monté de façon à pivoter à une extrémité en un point fixe parallèlement à l'axe de rotation du levier (19) ainsi qu'au voisinage de l'extrémité du bras de levier long (18) et est associé à son extrémité libre au bras de levier court (21).

8. Dispositif de blocage selon la revendication 7, caractérisé en ce que le bras pivotant (26) présente une surface interne située en regard de sa surface d'appui (31) pour la ceinture de sécurité (8), surface par laquelle le bras pivotant (26) peut s'appuyer quand la valeur limite de la force de traction de la ceinture est dépassée sur une surface d'appui de forme correspondante d'une pièce fixe (corps annulaire 32).

9. Dispositif de blocage selon l'une des revendications 6 à 8, caractérisé en ce que le levier (19) et l'élément de renvoi sont reliés par une pièce constitutive déformable.

10. Dispositif de levage selon la revendication 9, caractérisé en ce que la pièce constitutive déformable présente un comportement élastique par changement de forme.

11. Dispositif de blocage selon la revendication 10, caractérisé en ce que la pièce constitutive déformable consiste en un ressort spiral (23), qui quand la force de traction de la ceinture atteint une valeur limite, se déploie perpendiculairement au sens d'actionnement du dispositif de blocage (14).

12. Dispositif de blocage selon l'une des revendications 8 à 11, caractérisé en ce que le bras pivotant (26) est en matière plastique.

13. Dispositif de blocage selon l'une des revendications 6 à 12, caractérisé en ce que la mâchoire de serrage (17) déplaçable est disposée à l'extrémité du bras de levier long (18) de façon à pouvoir pivoter.

14. Dispositif de blocage selon l'une des revendications 1 à 13, caractérisé en ce que l'élément de renvoi est disposé sensiblement dans un plan perpendiculaire au sens longitudinal du véhicule de façon à pouvoir pivoter.
